# EUROPÄISCHE PATENTSCHRIFT

(11) **EP 2 713 562 B1**
(45) Veröffentlichungstag und Bekanntmachung des Hinweises auf die Patenterteilung: **01.05.2019**
(21) Anmeldenummer: 13182317.1
(22) Anmeldetag: 30.08.2013
(51) Int. Cl.: H04L 12/28, H01R 13/66, H01R 24/76

(54) **Interaktive Steckdose und Haussteuerungssystem**
Interactive socket and home control system
Prise interactive et système de commande domestique

(30) Priorität: 01.10.2012 DE 102012217963
(43) Veröffentlichungstag der Anmeldung: 02.04.2014
(73) Patentinhaber: ROBERT BOSCH GMBH, 70442 Stuttgart (DE)
(72) Erfinder: Erbacher, Christoph, 70825 Korntal-Muenchingen (DE); Andert, Markus, 70180 Stuttgart (DE); Nagy, Akos, 81927 Muenchen (DE); Taxis, Heiko, 73779 Deizisau (DE); Kloepfer, Frieder, 71229 Leonberg (DE); Knoll, Stefan, 74321 Bietigheim-Bissingen (DE); Rogalla, Oliver, 71665 Vaihingen (DE); Wack, Roman, 66453 Peppenkum (DE)

(56) Entgegenhaltungen:
- DE-A1-102009 050 171
- US-A1- 2006 115 008
- US-A1- 2009 271 013
- US-A1- 2012 070 153
- US-B1- 7 139 716

## Beschreibung

Die vorliegende Erfindung betrifft eine interaktive Steckdose und ein Haussteuerungssystem.

### Stand der Technik

Eine Steckdose dient üblicherweise als elektrischer Steckverbinder zwischen elektrischen Leitungen, z. B. um den Stromanschluss eines Haushaltsgerätes mit dem Stromanschluss eines öffentlichen Stromversorgungsnetzes zu verbinden. Die Steckdose wird entweder fest an einer Wand, als Aufputzsteckdose, oder versenkt, als Unterputzsteckdose, installiert, oder ist Teil einer mobilen Leitungskupplung, wie beispielsweise Tisch- oder Mehrfachsteckdosen, oder Verlängerungen, die für den mobilen Einsatz gedacht sind.

Es wurden Steckdosen entwickelt, welche neben der elektrischen Verbindung zwischen zwei Leitern weitere Funktionen umfassen, beispielsweise Steckdosen, welche zum Messen des Stroms und zum programmierten Schalten von Lasten ausgebildet sind. Diese Steckdosen können auch über Bussysteme vernetzt sein und ferngesteuert werden.

Die DE 10 2009 027 128 A1 beschreibt beispielsweise eine Vorrichtung zur Verteilung elektrischer Energie an eine veränderbare Anzahl von Verbrauchern. Für diese Vorrichtung zur Verteilung elektrischer Energie über Schnittstellen an eine veränderbare Anzahl von Verbrauchern, insbesondere eine Verteilvorrichtung für elektrische Energie innerhalb einer datenverarbeitenden Anlage, wobei die Vorrichtung einen eigenen Web-Server und ein Mittel zur Messung der elektrischen Leistung umfasst und die Schnittstelen über den Web-Server schaltbar sind, unter Erweiterung deren Verteilung elektrischer Energie zu schaffen, wird vorgeschlagen, dass in der Vorrichtung jede Schnittstelle bzw. Steckdose einen zugeordneten Leistungsmesser aufweist, der zur Datenübermittlung mit dem Web-Server verbunden ist.

Die DE 20 2012 100 893 U1 beschreibt eine funkkommunikationsfähige Steckdose, aufweisend: eine Stromeingabeeinheit, die der Verbindung zu einer Stromquelle dient; eine Stromausgabeeinheit, die der Ausgabe elektrischer Energie aus der Stromquelle dient; einen Schalter, der elektrisch zwischen der Stromeingabeeinheit und der Stromausgabeeinheit vorgesehen ist und bestimmt, ob die funkkommunikationsfähige Steckdose die elektrische Energie aus der Stromquelle abgibt; und ein Funkkommunikationsmodul, das elektrisch an die Stromeingabeeinheit und den Schalter angeschlossen ist und dem drahtlosen Empfang eines Steuersignals dient, wobei das Funkkommunikationsmodul gemäß dem Steuersignal den Schalter steuert.

Die DE 10 2009 050 171 A1 beschreibt eine Multifunktionseinheit innerhalb eines Hausautomatisierungs- und Hausinformationssystem aufweisend: eine Verbindung zu einer Versorgungsleitung zur Stromversorgung der Multifunktionseinheit; mindestens eine erste Schnittstelle zur funkgestützten Kommunikation und mindestens eine zweite Schnittstelle zur drahtgebundenen Kommunikation über die Versorgungsleitung für bidirektionale externe Datenverbindungen; ein Steuermodul zum Verwalten der Datenverbindungen und zum Steuern und/oder Regeln von Hausautomatisierungs- und Hausinformationssystem-Komponenten, welche an der ersten und/oder zweiten Schnittstelle angeschlossen sind; eine Ausgabevorrichtung; und eine Eingabevorrichtung; wobei die Multifunktionseinheit plugand-play-fähig ist.
Die US 2009/271013 A1 beschreibt ein Steuerverfahren eines Monitorsystems, wobei über eine Strom-Buchse Daten gesendet werden können.
Die US 2012/070153 Albeschreibt eine Glühbirne, welche mit einem Mikrophon versehen ist. Ferner umfasst die Glühbirne eine Auswerteeinrichtung, welche ausgebildet ist, um zu erkennen, ob das mit dem Mikrophon erfasste Schall von einem Menschen verursacht wurde. Des Weiteren umfasst die Glühbirne eine Datenübertragungseinrichtung.

### Offenbarung der Erfindung

Die vorliegende Erfindung offenbart eine interaktive Steckdose mit den Merkmalen des Patentanspruchs 1 und ein Haussteuerungssystem mit den Merkmalen des Patentanspruchs 9.

Demgemäß ist vorgesehen:
Eine interaktive Steckdose gemäß Anspruch 1.

Ferner ist ein Haussteuerungssystem zur Steuerung eines Hauses und seiner Einrichtungen vorgesehen, mit einer zentralen Steuereinrichtung, welche ausgebildet ist, die Einrichtungen des Hauses mittels Steuer-Signalen anzusteuern, mit einer Vielzahl von interaktiven Steckdosen nach einem der vorhergehenden Ansprüche, welche mit der zentralen Steuereinrichtung gekoppelt sind, wobei die zentralen Steuereinrichtung mittels den Übertragungssignalen ansteuerbar ist.

### Vorteile der Erfindung

Die der vorliegenden Erfindung zu Grunde liegende Erkenntnis besteht darin, eine Steckdose mit einer akustischen Sensoreinrichtung zu versehen, welche akustische

Signale detektieren kann. Ferner weist die erfindungsgemäße interaktive Steckdose eine Signalerzeugungseinrichtung, welche basierend auf der von der akustischen Sensoreinrichtung erfassten akustischen Signale ein Übertragungs-Signal erzeugt, welches mittels der Kommunikationseinrichtung nach extern übertragbar ist.

Die interaktive Steckdose kann somit als Interaktionspunkt innerhalb eines Systems dienen, das aus weiteren physikalischen Komponenten, beispielsweise weitere inaktive Steckdosen, elektrischen Geräten und Vorrichtungen, besteht, die durch Vernetzung verbunden sind. Dabei dient die interaktive Steckdose zur Ein-/Ausgabe von Information des Systems und zusätzlich zur Interaktion der Benutzer untereinander. Anwendungsfelder des Systems sind z. B. Themen rund um Haus und Gebäude, insbesondere Sicherheit, Energiesteuerung, Komfort, Lichtsteuerung und Familienorganisation. Durch diese Ausbildung der interaktiven Steckdose erfolgt eine Erweiterung der funktionalen Möglichkeiten des Systems bezogen auf den jeweiligen Ort an dem die interaktive Steckdose platziert ist.

Durch diese Ausbildung der Steckdose kann eine Sprachverarbeitungskomponente in eine Steckdose integriert werden. Durch die Kommunikationseinrichtung der Steckdose können aufwändige Teile der Sprachverarbeitung in einem Clouddienst umgesetzt werden, wodurch sowohl die Qualität der Sprachinteraktion gesteigert als auch die Kosten für die Hardware gesenkt werden können.

Die akustische Sensoreinrichtung kann beispielsweise ein Mikrophon umfassen, welches als aktiver Wandler, beispielsweise als Piezomikrophon oder dynamisches Mikrophon, oder als passiver Wandler, beispielsweise als Hochfrequenzkondensatormikrophon, ausgebildet ist.

Vorteilhafte Ausführungsformen und Weiterbildungen ergeben sich aus den Unteransprüchen sowie aus der Beschreibung unter Bezugnahme auf die Figuren.

In einer vorteilhaften Ausführungsform ist die Kommunikationseinrichtung ausgebildet, Empfangs-Signale zu empfangen, wobei die Steckdose mit einem Lautsprecher gekoppelt ist, welcher ausgebildet ist, basierend auf den empfangen Empfangs-Signalen akustische Signale zu erzeugen. Durch diese Ausbildung ist es möglich, die interaktive Steckdose als Telefon zu verwenden. Der Lautsprecher kann beispielsweise als Piezolautsprecher ausgebildet sein, wodurch eine besonders kleine Baugröße der Steckdose realisiert werden kann.

In einer weiteren vorteilhaften Ausführungsform ist eine elektrische Sensoreinrichtung vorgesehen, welche ausgebildet ist, die Menge an elektrischer Energie zu erfassen, welche von der Stromausgabeeinrichtung ausgegeben wurde und die Signalerzeugungseinrichtung ausgebildet ist, basierend auf der von der elektrischen Sensoreinrichtung erfassten Werte das Übertragungs-Signal zu erzeugen. Beispielsweise kann die Menge an elektrischer Energie mittels einer Spannungsabfall über einem eingebauten oder externen Messwiderstand (Shunt) gemessen werden

In einer weiteren vorteilhaften Ausführungsform ist zumindest eine weitere Sensoreinrichtung vorgesehen, welche ausgebildet ist, die Helligkeit in der Nähe der Steckdose, die Anwesenheit eines Menschen in der Nähe der Steckdose, die Temperatur in der Nähe der Steckdose und/oder die Feuchtigkeit in der Nähe der Steckdose zu erfassen, wobei die Signalerzeugungseinrichtung ausgebildet ist, basierend auf dem von der weiteren Sensoreinrichtung erfassten Wert das Übertragungs-Signal zu erzeugen. Beispielsweise könnte die interaktive Steckdose auch eine Sensoreinrichtung umfassen, welche die Zusammensetzung der Luft, also einen Gassensor, den Luftdruck, und/oder die Strahlung erfasst und basierend auf diesen erfassten Werten das Übertragungssignal erzeugt. Durch diese Ausbildung könnte die interaktive Steckdose sozusagen als Sensorvorrichtung verwendet werden, welche alle von einem Benutzer gewünschten Informationen eines Raumes erfasst und an externe Einrichtungen überträgt, welche die erfassten Informationen darstellten oder vorherdefinierte Aktionen ausführen.

In einer weiteren vorteilhaften Ausführungsform ist ein Schalter zwischen der Stromeingabeeinrichtung und der Stromausgabeeinrichtung vorgesehen, welcher in Abhängigkeit der von der akustischen Sensoreinrichtung, elektrischen Sensoreinrichtung, weiteren Sensoreinrichtung erfassten Signale und/oder in Abhängigkeit des von der Kommunikationseinrichtung empfangen Empfangs-Signals schaltbar ist.

In einer weiteren vorteilhaften Ausführungsform ist die Kommunikationseinrichtung ausgebildet, drahtlos und/oder drahtgebunden das Übertragungs-Signal zu übertragen und/oder das Empfangs-Signal zu empfangen. Beispielsweise verfügt die Kommunikationseinrichtung über eine Bluetooth-, WLAN-, NFC- und/oder Infrarot-Schnittstelle, welche ausgebildet, Signale zu senden oder zu empfangen.

In einer weiteren vorteilhaften Ausführungsform ist eine Anzeige vorgesehen ist, welche ausgebildet ist, den Betriebszustand der Steckdose und/oder die von der akustischen Sensoreinrichtung, der elektrischen Sensoreinrichtung, weiteren Sensoreinrichtung erfassten Signale und/oder des von der Kommunikationseinrichtung empfangenen Empfangs-Signal einem Benutzer anzuzeigen. Beispielsweise weist die interaktive Steckdose ein Display auf, welches die erfassten Werten graphisch darstellt.

In einer weiteren vorteilhaften Ausführungsform ist die Anzeige als LED ausgebildet. Die Anzeige könnte z. B. auch den Betriebszustand der interaktiven Steckdose einem Benutzer darstellen. Beispielsweise könnte lediglich eine Leuchtdiode zur Verfügung gestellt sein, welche, falls die interaktive Steckdose keine akustischen Signale empfängt, nicht leuchtet und, falls die interaktive Steckdose akustische Signale empfängt, leuchtet oder blinkt.

Erfindungsgemäß ist die Steckdose mit einer Einschaltautomatik versehen, welche ausgebildet ist, die Steckdose beim Erfassen eines vorherbestimmten akustischen Signals einzuschalten. Die Steckdose ist derart ausgestaltet, dass diese im Normzustand keine akustischen Signale oder andere Signale erfasst und sozusagen ausgeschaltet ist, wobei Sie keine oder nur sehr wenig Energie verbraucht. Durch das Sprechen eines Kennwortes oder durch Erzeugung eines vorherdefinierten Geräusches könnte die interaktive Steckdose eingeschaltet werden, sodass diese akustische Signale empfängt.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

### Kurze Beschreibung der Zeichnungen

Die vorliegende Erfindung wird nachfolgend anhand der in den schematischen Figuren der Zeichnungen angegebenen Ausführungsbeispiele näher erläutert. Es zeigen dabei:
Fig. 1 eine schematische Schnittansicht einer interaktiven Steckdose gemäß einer ersten Ausführungsform der vorliegenden Erfindung;
Fig. 2 eine schematische Schnittansicht einer interaktiven Steckdose gemäß einer zweiten Ausführungsform der vorliegenden Erfindung; und
Fig. 3 eine schematische Darstellung eines Haussteuerungssystems gemäß einer Ausführungsform der Erfindung.

In allen Figuren sind gleiche bzw. funktionsgleiche Elemente und Überwachungsvorrichtungen - sofern nichts Anderes angegeben ist - mit denselben Bezugszeichen versehen.

### Ausführungsformen der Erfindung

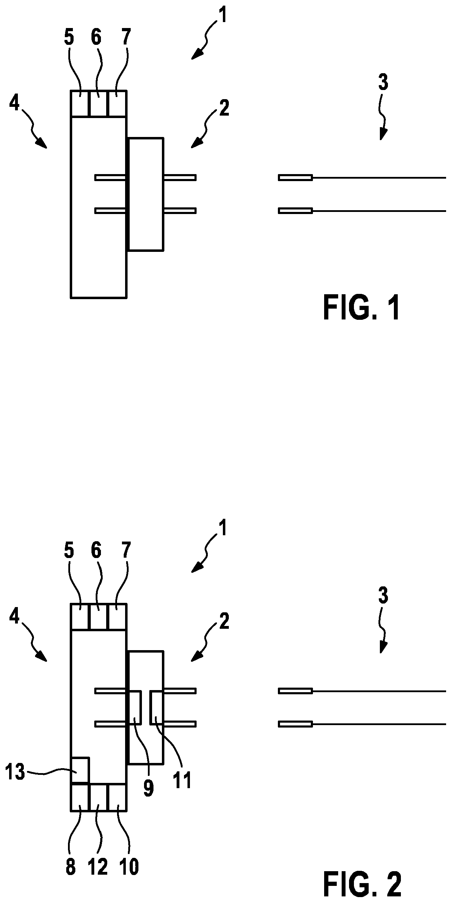

Fig. 1 zeigt eine schematische Schnittansicht einer interaktiven Steckdose 1 gemäß einer ersten Ausführungsform der vorliegenden Erfindung. Die interaktive Steckdose 1 weist eine Stromeingabeeinrichtung 2 auf, die zur Verbindung der Steckdose 1 mit einer Stromquelle 3 ausgebildet ist. Die Stromquelle 3 kann beispielsweise ein öffentliches Stromversorgungsnetz oder ein lokales, nicht öffentliches Stromversorgungsnetz sein. Die Steckdose 1 umfasst ferner eine Stromausgabeeinrichtung 4, die zur Ausgabe elektrischer Energie ausgebildet ist.

Des Weiteren umfasst die Steckdose 1 eine akustische Sensoreinrichtung 5, welche ausgebildet ist, akustische Signale zu erfassen. Beispielsweise weist die Steckdose ein dynamisches Mikrophon oder ein Kondensatormikrophon auf, welches die akustischen Signale erfasst.

Des Weiteren umfasst die Steckdose eine Signalerzeugungseinrichtung 6, welche ausgebildet ist, basierend auf den von der akustischen Sensoreinrichtung 5 erfassten akustischen Signalen ein Übertragungs-Signal zu erzeugen.

Überdies weist die Steckdose 1 eine Kommunikationseinrichtung 7 auf, welche ausgebildet ist, das von der Signalerzeugungseinrichtung 6 erzeugte Übertragungs-Signal nach extern zu übertragen. Die Kommunikationseinrichtung kann die Übertragungssignale drahtlos, beispielsweise per Bluetooth, WLAN, NFC, Infrarot etc. an andere Steckdosen senden, oder drahtgebunden, beispielsweise über Powerline, die Übertragungssignale senden.

Die Empfänger der Übertragungssignale können beispielsweise weitere interaktive Steckdosen, Einrichtungen, Geräte, das Internet usw. sein.

Fig. 2 zeigt eine schematische Schnittansicht einer interaktiven Steckdose 1 gemäß einer zweiten Ausführungsform der vorliegenden Erfindung. Die interaktive Steckdose 1 umfasst eine akustische Sensoreinrichtung 5 zur Aufnahme von Sprache und Geräuschen im Umfeld, beispielsweise im Radius von 0-7m der Steckdose 1. Die Sprachausgabe erfolgt über einen im Gehäuse der Steckdose eingebauten Lautsprecher 8. Die Ausgabe von akustischen Signalen kann auch über bereits installierte Lautsprechers erfolgen, welche beispielsweise bereits Bestandteil einer Stereoanlage sind, und welche mittels des Übertragungssignals ansteuerbar sind. In der Steckdose 1 können weiterhin Sensoren 10 zur Erfassung von Umgebungsgrößen eingebaut sein, z.B. zur Helligkeitserkennung, Bewegungserkennung, Messung der Feuchte, Messung der Temperatur. Die Steckdose 1 kann Mittels der eklektischen Sensoreinrichtung 9 den aktuellen Stromverbrauch messen und mittels des Schalters 11 an die Steckdose 1 angeschlossene Lasten schalten. Die Steckdose 1 ist aufgrund der integrierten Kommunikationseinrichtung 7 kommunikationsfähig, z. B. Powerline oder Funk, und kann alle Zustände und erfasste Umgebungsgrößen an andere Systempartner übermitteln. Die Steckdose 1 kann auch derart ausgebildet sein, dass die Steckdose 1 durch ein Schlüsselwort oder Geräusch, ggfs. gekoppelt mit Bewegungserkennung einer Person, einen Kommunikationsmodus versetzbar ist. Beispielsweise ist die Steckdose ausgebildet, nur in dem Kommunikationsmodus erfasste Sprache und Geräusche zur Weiterverarbeitung an den cloud-basierten Interaktionsdienst weiter zuleiten.

Des Weiteren umfasst die Steckdose 1 eine Anzeige 12, welche ausgebildet ist, den Betriebszustand der Steckdose 1 anzuzeigen, z. B. durch eine Leuchteinheit, die Zuhören und Sprechen signalisiert. Die akustische Signalerfassung mittels der akustischen Sensoreinrichtung 5 kann auch dynamisch an die Umgebungslautstärke angepasst werden.

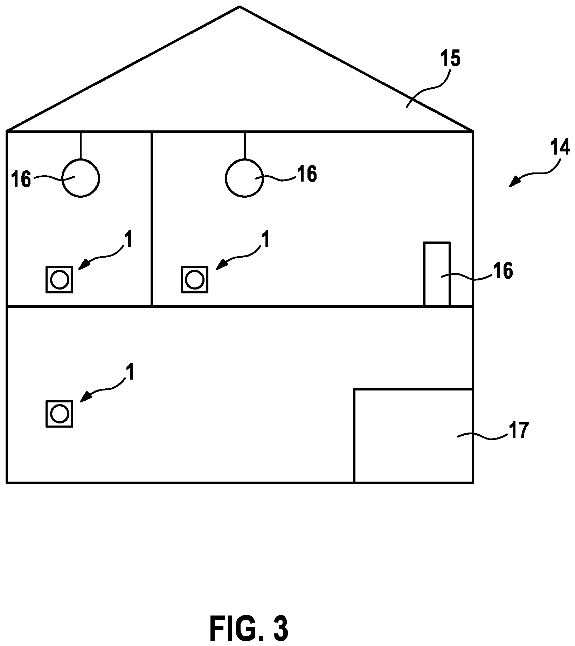

Fig. 3 zeigt eine schematische Darstellung eines Haussteuerungssystems 14 gemäß einer Ausführungsform der Erfindung. Das Haussteuerungssystem 14 dient zur Steuerung eines Hauses 15 und seiner Einrichtungen 16. Die Einrichtungen 16 können beispielsweise eine Heizung, eine Klimaanlage, einen Fernseher, einen Computer, die Beleuchtung, Kameras etc. umfassen, wobei das Haussteuerungssystem 14 ausgebildet ist, diese Einrichtungen 16 anzusteuern und zu betreiben. Hierfür weist das Haussteuerungssystem eine zentrale Steuereinrichtung 17 auf, welche ausgebildet ist, die Einrichtungen 16 des Hauses mittels Steuer-Signalen anzusteuern.

Die Einrichtungen 16 des Hauses 14 sind über ein nicht dargestelltes Leistungs- und Kommunikationsnetzwerk miteinander verbunden, sodass die Einrichtungen untereinander kommunizieren können.

Ferner weist das Haussteuerungssystem eine Vielzahl von interaktiven Steckdosen 1 auf, welche mit der zentralen Steuereinrichtung 17 gekoppelt sind, wobei die zentralen Steuereinrichtung 17 mittels der Übertragungssignale ansteuerbar ist. Mittels der interaktiven Steckdosen 1 ist es möglich, die einzelnen Einrichtungen 16 des Hauses 14 mittels Sprache ansteuern. Die Spracherkennung und Sprachverarbeitung der von den einzelnen akustischen Sensoreinrichtungen 5 der Steckdosen 1 kann in der zentralen Steuereinrichtung 17 erfolgen. Auch ist es möglich, dass die zentrale Steuereinrichtung 17 und/oder die einzelnen Steckdosen 1 über eine Internetschnittstelle mit dem Internet verbunden sind, und die Sprachverarbeitung und Spracherkennung bzw. die Steuerung der einzelnen Einrichtungen 16 mithilfe eines externen Masters erfolgt, welcher auch örtlich getrennt von dem Haussteuerungssystem 17 vorgesehen sein kann.

## Patentansprüche

1. Interaktive Steckdose (1),
mit einer Stromeingabeeinrichtung (2), die zur Verbindung der Steckdose (1) mit einer Stromquelle (3) ausgebildet ist,
mit einer Stromausgabeeinrichtung (4), die zur Ausgabe elektrischer Energie ausgebildet ist,
mit einer akustischen Sensoreinrichtung (5), welche ausgebildet ist, akustische Signale zu erfassen,
mit einer Signalerzeugungseinrichtung (6), welche ausgebildet ist, basierend auf der von der akustischen Sensoreinrichtung (5) erfassten akustischen Signale ein Übertragungs-Signal zu erzeugen,
mit einer Kommunikationseinrichtung (7), welche ausgebildet ist, das von der Signalerzeugungseinrichtung (6) erzeugte Übertragungs-Signal nach extern zu übertragen,
wobei die Steckdose (1) mit einer Einschaltautomatik (13) versehen ist, welche ausgebildet ist, die Steckdose (1) beim Erfassen eines vorherbestimmten akustischen Signals einzuschalten,
wobei die Steckdose (1) im Normzustand ausgeschaltet ist und keine akustischen Signale erfasst.

2. Interaktive Steckdose (1) nach Anspruch 1,
**dadurch gekennzeichnet,**
**dass** die Kommunikationseinrichtung (7) ausgebildet ist, Empfangs-Signale zu empfangen, wobei die Steckdose mit einem Lautsprecher (8) gekoppelt ist, welcher ausgebildet ist, basierend auf den empfangen Empfangs-Signalen akustische Signale zu erzeugen.

3. Interaktive Steckdose (1) nach Anspruch 1 oder 2,
**dadurch gekennzeichnet,**
**dass** eine elektrische Sensoreinrichtung (9) vorgesehen ist, welche ausgebildet ist, die Menge an elektrischer Energie zu erfassen, welche von der Stromausgabeeinrichtung (4) ausgegeben wurde und die Signalerzeugungseinrichtung (6) ausgebildet ist, basierend auf der von der elektrischen Sensoreinrichtung (9) erfassten Werte das Übertragungs-Signal zu erzeugen.

4. Interaktive Steckdose (1) nach einem der vorhergehenden Ansprüche, **dadurch gekennzeichnet,**
**dass** zumindest eine weitere Sensoreinrichtung (10) vorgesehen ist, welche ausgebildet ist, die Helligkeit in der Nähe der Steckdose (1), die Anwesenheit eines Menschen in der Nähe der Steckdose (1), die Temperatur in der Nähe der Steckdose (1) und/oder die Feuchtigkeit in der Nähe der Steckdose (1) zu erfassen,
wobei die Signalerzeugungseinrichtung (6) ausgebildet ist, basierend auf dem von der weiteren Sensoreinrichtung (10) erfassten Wert das Übertragungs-Signal zu erzeugen.

5. Interaktive Steckdose (1) nach einem der vorhergehenden Ansprüche, **dadurch gekennzeichnet,**
**dass** ein Schalter (11) zwischen der Stromeingabeeinrichtung (2) und der Stromausgabeeinrichtung (4) vorgesehen ist, welcher in Abhängigkeit der von der akustischen Sensoreinrichtung (5), elektrischen Sensoreinrichtung (9), weiteren Sensoreinrichtung (10) erfassten Signale und /oder in Abhängigkeit des von der Kommunikationseinrichtung empfangen Empfangs-Signals schaltbar ist.

6. Interaktive Steckdose (1) nach einem der vorhergehenden Ansprüche,
**dadurch gekennzeichnet,**
**dass** die Kommunikationseinrichtung (6) ausgebildet ist, drahtlos und/oder drahtgebunden das Übertragungs-Signal zu übertragen und/oder das Empfangs-Signal zu empfangen.

7. Interaktive Steckdose (1) nach einem der vorhergehenden Ansprüche,
**dadurch gekennzeichnet,**
**dass** eine Anzeige (12) vorgesehen ist, welche ausgebildet ist, den Betriebszustand der Steckdose (1) und/oder die von der akustischen Sensoreinrichtung (5), der elektrischen Sensoreinrichtung (9), weiteren Sensoreinrichtung (10) erfassten Signale und/oder des von der Kommunikationseinrichtung empfangenen Empfangs-Signal einem Benutzer anzuzeigen.

8. Interaktive Steckdose (1) nach Anspruch 7,
**dadurch gekennzeichnet,**
**dass** die Anzeige als LED ausgebildet ist.

9. Haussteuerungssystem (14) zur Steuerung eines Hauses (15) und seiner Einrichtungen (16),
mit einer zentralen Steuereinrichtung (17), welche ausgebildet ist, die Einrichtungen (16) des Hauses (16) mittels Steuer-Signalen anzusteuern,
mit einer Vielzahl von interaktiven Steckdosen (1) nach einem der vorhergehenden Ansprüche, welche mit der zentralen Steuereinrichtung (17) gekoppelt sind, wobei die zentrale Steuereinrichtung (17) mittels den Übertragungssignalen ansteuerbar ist.

## Claims

1. Interactive socket (1),
having a current input device (2) which is designed to connect the socket (1) to a current source (3), having a current output device (4) which is designed to output electrical energy,
having an acoustic sensor device (5) which is designed to capture acoustic signals,
having a signal generation device (6) which is designed to generate a transmission signal on the basis of the acoustic signals captured by the acoustic sensor device (5),
having a communication device (7) which is designed to transmit the transmission signal generated by the signal generation device (6) to the outside,
wherein the socket (1) is provided with an automatic switch-on (13) which is designed to switch on the socket (1) when a predetermined acoustic signal is captured,
wherein the socket (1) is switched off in the normal state and does not capture any acoustic signals.

2. Interactive socket (1) according to Claim 1, **characterized**
**in that** the communication device (7) is designed to receive reception signals, wherein the socket is coupled to a loudspeaker (8) which is designed to generate acoustic signals on the basis of the received reception signals.

3. Interactive socket (1) according to Claim 1 or 2, **characterized**
**in that** an electrical sensor device (9) is provided and is designed to capture the amount of electrical energy output by the current output device (4), and the signal generation device (6) is designed to generate the transmission signal on the basis of the values captured by the electrical sensor device (9).

4. Interactive socket (1) according to one of the preceding claims,
**characterized**
**in that** at least one further sensor device (10) is provided and is designed to capture the brightness in the vicinity of the socket (1), the presence of a person in the vicinity of the socket (1), the temperature in the vicinity of the socket (1) and/or the humidity in the vicinity of the socket (1), wherein the signal generation device (6) is designed to generate the transmission signal on the basis of the value captured by the further sensor device (10).

5. Interactive socket (1) according to one of the preceding claims,
**characterized**
**in that** a switch (11) is provided between the current input device (2) and the current output device (4), which switch can be switched on the basis of the signals captured by the acoustic sensor device (5), the electrical sensor device (9) and the further sensor device (10) and/or on the basis of the reception signal received by the communication device.

6. Interactive socket (1) according to one of the preceding claims,
**characterized**
**in that** the communication device (6) is designed to transmit the transmission signal and/or to receive the reception signal in a wireless and/or wired manner.

7. Interactive socket (1) according to one of the preceding claims,
**characterized**
**in that** a display (12) is provided and is designed to display the operating state of the socket (1) and/or the signals captured by the acoustic sensor device (5), the electrical sensor device (9) and the further sensor device (10) and/or the reception signal received by the communication device to a user.

8. Interactive socket (1) according to Claim 7,
**characterized**
**in that** the display is in the form of an LED.

9. Home control system (14) for controlling a home (15) and its devices (16),
having a central control device (17) which is designed to control the devices (16) in the home (16) by means of control signals,
having a multiplicity of interactive sockets (1) according to one of the preceding claims which are coupled to the central control device (17), wherein the central control device (17) can be controlled by means of the transmission signals.

## Revendications

1. Prise interactive (1),
pourvue d'un système applicateur de courant (2), qui est conçu pour relier la prise (1) avec une source de courant (3),
pourvue d'un système distributeur de courant (4), qui est conçu pour distribuer de l'énergie électrique,
pourvue d'un système de capteur (5) acoustique, lequel est conçu pour détecter des signaux acoustiques,
pourvue d'un système générateur de signaux (6), lequel est conçu pour générer un signal de transmission, sur la base des signaux acoustiques détectés par le système de capteur (5) acoustique, pourvue d'un système de communication (7), lequel est conçu pour transmettre en externe le signal de transmission généré par le système générateur de signaux (6),
la prise (1) étant munie d'une mise en marche automatique (13), laquelle est conçue pour mettre en marche la prise (1) lors de la détection d'un signal acoustique déterminé précédemment,
dans l'état normal, la prise (1) étant déconnectée et ne détectant aucun signal acoustique.

2. Prise interactive (1) selon la revendication 1, **caractérisée en ce que**
le système de communication (7) est conçu pour réceptionner des signaux de réception, la prise étant couplée avec un haut-parleur (8), lequel est conçu pour générer des signaux acoustiques sur la base des signaux de réception réceptionnés.

3. Prise interactive (1) selon la revendication 1 ou 2,
**caractérisée en ce qu'**
il est prévu un système électrique de capteur (9), lequel est conçu pour détecter la quantité d'énergie électrique laquelle a été distribuée par le système distributeur de courant (4) et le système générateur de signaux (6) est conçu pour générer le signal de transmission, sur la base des valeurs détectées par le système électrique de capteur (9).

4. Prise interactive (1) selon l'une quelconque des revendications précédentes,
**caractérisée en ce qu'**
il est prévu au moins un système de capteur (10) supplémentaire, lequel est conçu pour détecter la luminosité à proximité de la prise (1), la présence d'un individu à proximité de la prise (1), la température à proximité de la prise (1) et/ou l'humidité à proximité de la prise (1),
le système générateur de signaux (6) étant conçu pour générer le signal de transmission sur la base de la valeur détectée par le système de capteur (10) supplémentaire.

5. Prise interactive (1) selon l'une quelconque des revendications précédentes,
**caractérisée en ce qu'**
un commutateur (11) est prévu entre le système applicateur de courant (2) et le système distributeur de courant (4), lequel est commutable en fonction des signaux détectés par le système de capteur (5) acoustique, le système de capteur (9) électrique, le système de capteur (10) supplémentaire et/ou en fonction du signal de réception réceptionné par le système de communication.

6. Prise interactive (1) selon l'une quelconque des revendications précédentes,
**caractérisée en ce que**
le système de communication (6) est conçu pour transmettre le signal de transmission et/ou pour réceptionner le signal de réception sans fil et/ou de manière filaire.

7. Prise interactive (1) selon l'une quelconque des revendications précédentes,
**caractérisée en ce qu'**
il est prévu un affichage (12) lequel est conçu pour afficher à l'attention d'un utilisateur l'état de fonctionnement de la prise (1) et/ou les signaux détectés par le système de capteur (5) acoustique, le système de capteur (9) électrique, le système de capteur (10) supplémentaire et/ou le signal de réception réceptionné par le système de communication.

8. Prise interactive (1) selon la revendication 7, **caractérisée en ce que**
l'affichage est conçu sous la forme d'une LED.

9. Système domotique (14), destiné à commander une maison (15) et ses systèmes (16),
pourvu d'une unité de commande centralisée (17), laquelle est conçue pour actionner les systèmes (16) de la maison (16) à l'aide de signaux de commande, pourvu d'une pluralité de prises interactives (1) selon l'une quelconque des revendications précédentes, lesquelles sont accouplées avec le système de commande centralisé (17), le système de commande centralisé (17) étant susceptible d'être activé à l'aide des signaux de transmission.
